# EUROPÄISCHE PATENTSCHRIFT

(11) **EP 4 264 105 B1**
(45) Veröffentlichungstag und Bekanntmachung des Hinweises auf die Patenterteilung: **20.05.2026**
(21) Anmeldenummer: 21839353.6
(22) Anmeldetag: 10.12.2021
(51) Int. Cl.: F16L 33/207, F16L 13/14

(54) **VERBINDUNGSELEMENTSYSTEM ZUR HERSTELLUNG EINER ROHRVERBINDUNG, DIESES UMFASSENDE ROHRVERBINDUNG SOWIE VERFAHREN ZUR HERSTELLUNG EINER SOLCHEN ROHRVERBINDUNG**
CONNECTING ELEMENT SYSTEM FOR PRODUCING A TUBE CONNECTION, TUBE CONNECTION COMPRISING THE FORMER, AND METHOD FOR PRODUCING A TUBE CONNECTION OF THIS TYPE
SYSTÈME D'ÉLÉMENTS DE RACCORDEMENT POUR LA PRODUCTION D'UN RACCORDEMENT DE TUBES, RACCORDEMENT DE TUBES COMPRENANT CE DERNIER, ET PROCÉDÉ DE PRODUCTION D'UN RACCORDEMENT DE TUBES DE CE TYPE

(30) Priorität: 17.12.2020 DE 102020133895; 15.03.2021 DE 102021106229
(43) Veröffentlichungstag der Anmeldung: 25.10.2023
(73) Patentinhaber: REHAU Industries SE & Co. KG, 95111 Rehau (DE)
(72) Erfinder: HOMBURG, Hansi, 91315 Höchstadt (DE); KIRCHBERGER, Andreas, 91074 Herzogenaurach (DE); SCHAAF, Thomas, 91315 Höchstadt (DE); VOCKS, Oliver, 90765 Fürth (DE)
(86) Internationale Anmeldenummer: PCT/EP2021/085193
(87) Internationale Veröffentlichungsnummer: WO 2022/128789

(56) Entgegenhaltungen:
- AU-C4- 2019 100 400
- DE-A1- 102018 128 169
- DE-U1- 202004 000 031
- DE-U1- 202019 104 502
- ES-T3- 2 550 498

## Beschreibung

Die vorliegende Erfindung betrifft ein Verbindungselementsystem zur Herstellung einer Rohrverbindung zwischen einem Verbindungselement und einem Kunststoffrohr, einem Kunststoff-Verbundrohr oder einem Metall-Kunststoff-Verbundrohr, das ein mit einer Quetschhülse konfektioniertes Verbindungselement, das mindestens einen mit mehreren umlaufenden Außenrippen versehenen Stützkörper zum Aufschieben eines Rohrendes umfasst und eine Quetschhülse umfasst. Darüber hinaus bezieht sich die vorliegende Erfindung auf eine Rohrverbindung, die ein derartiges Verbindungselementsystem umfasst, sowie auf ein Verfahren zur Herstellung einer derartigen Rohrverbindung.

Verbindungselemente für Doppelhülsenverbindungen sowie diese umfassende Rohrverbindungen sind aus dem Stand der Technik bekannt, beispielsweise aus der DE 10 2016 117 480 A1 oder der DE 20 2004 000 031 U1.

Daraus geht eine Rohrverbindung hervor, die einen Stützkörper, eine Innenhülse bzw. Quetschhülse und eine axial aufgeschobene Außenhülse umfasst. Zur Anlage eines zum Aufschieben der Außenhülse erforderlichen Verpressjochs eines Presswerkzeug an der Quetschhülse weist diese einen einstückig mit der Quetschhülse ausgebildeten Verpresskragen auf. Dies hat zur Folge, dass die Quetschhülse nach dem Aufschieben der Außenhülse eine ungleichmäßige radiale Verformung besitzt. Dies hat wiederum zur Folge, die Außenhülse während des Einsatzes einer solchen Rohrverbindung in einem Rohrleitungssystem eine erhöhte Wanderneigung besitzt, was eine zusätzliche Fixierung der Außenhülse auf dem Stützkörper erforderlich macht. Diese ungleichmäßige radiale Verformung der Außenhülse bedingt darüber hinaus ein schlechteres Dichtverhalten einer solchen Rohrverbindung. Ferner ist die Quetschhülse starr auf dem Stützkörper fixiert. Diese starre Verbindung erschwert das Einschieben eines Rohrendes in den Aufnahmeraum zwischen dem Stützkörper und der Innenhülse. Das ist insbesondere dann der Fall, wenn das Rohrende stark oval ausgebildet ist, was insbesondere nach dem Abschneiden vom Rohrbund der Fall sein kann, oder wenn eine ausgeprägte Exzentrizität des Rohres vorhanden ist. Weiter sind vorkonfektionierte Quetschhülsen für Crimpverbindugen aus der ES 2 550 498 bekannt.

Vor diesem Hintergrund liegt die Aufgabe der vorliegenden Erfindung in der Bereitstellung eines Verbindungselementsystems zur Herstellung einer Rohrverbindung, das die Nachteile des Stands der Technik überwindet. Insbesondere soll das erfindungsgemäße Verbindungselementsystem in einer daraus gebildeten Rohrverbindung zu einer über einen langen Zeitraum dichten Rohrverbindung führen. Darüber hinaus soll ein Rohrende, insbesondere bei starker Ovalität oder Exzentrizität leicht zwischen den Stützkörper und die Quetschhülse bzw. Innenhülse einschiebbar sein.

Diese und andere Aufgaben werden gemäß der vorliegenden Erfindung durch ein Verbindungselementsystem zur Herstellung einer Rohrverbindung mit den Merkmalen des Anspruchs 1, durch eine Rohrverbindung mit den Merkmalen des Anspruchs 5 sowie durch ein Verfahren zur Herstellung einer Rohrverbindung mit den Merkmalen des Anspruchs 9 gelöst. Bevorzugte Ausführungsformen des erfindungsgemäßen Verbindungselementsystems, der erfindungsgemäßen Rohrverbindung und des erfindungsgemäßen Verfahrens sind jeweils in den abhängigen Ansprüchen beschrieben.

Im Gegensatz zu den starren Arretierungsmethoden des Stands der Technik schlägt die vorliegende Erfindung die flexible Verbindung zwischen der Quetschhülse und dem Verbindungselement durch ein Halteelement als eigenes Bauteil vor das mit dem Verbindungselement und der Quetschhülse in Eingriff steht. Dadurch ist die Quetschhülse auf dem Verbindungselement vorkonfektioniert, was die Herstellung der Rohrverbindung erleichtert. Da die Quetschhülse als separates Bauteil ausgebildet ist, das zu den während des Einsatzes der erfindungsgemäßen Rohrverbindung zu keinem Zeitpunkt mit dem durch die erfindungsgemäße Rohrverbindung strömenden Medium in Kontakt steht, kann als Material für die Quetschhülse ein kostengünstigeres und/oder chemisch weniger beständiges Material zum Einsatz kommen. Durch das Halteelement als separates Bauteil besitzt die Quetschhülse eine gewisse Beweglichkeit relativ zur Mittelachse des Verbindungselements. Dies erleichtert die Einsteckbarkeit des Rohres, da eine eventuell vorhandene Exzentrizität des Rohres ausgeglichen werden kann. Darüber hinaus bewirkt die Beweglichkeit der Quetschhülse relativ zur Mittelachse neben einer verbesserten Abdichtung über die gesamte Stützkörperlänge auch, dass sich Quetsch- und Außenhülse in einem Gleichgewichtszustand befinden, wodurch eine axiale Relativbewegung der Außenhülse verhindert wird.

Dementsprechend liegt die vorliegende Erfindung in der Bereitstellung eines Verbindungselementsystems zur Herstellung einer Rohrverbindung nach Anspruch 1.

Darüber hinaus stellt die vorliegende Erfindung eine Rohrverbindung zwischen einem Rohrende eines Kunststoffrohrs, eines Kunststoff-Verbundrohrs oder eines Metall-Kunststoff-Verbundrohrs und einem Verbindungselement zur Verfügung, wobei die Rohrverbindung das erfindungsgemäße Verbindungselementsystem nach Anspruch 1 umfaßt. Letztlich betrifft die vorliegende Erfindung auch ein Verfahren zur Herstellung dieser erfindungsgemäßen Rohrverbindung.

Wie hierin verwendet bedeutet der Begriff "Konfektionierung des Verbindungselements mit einer Quetschhülse" die vorherige Befestigung oder Vormontage der Quetschhülse an dem Verbindungselement, so dass der Handwerker an der Baustelle nur ein Bauteil in die Hand zu nehmen braucht.

Bei dem erfindungsgemäßen Verbindungselementsystem weist das Verbindungselement eine Eingriffsnut und das Halteelement mindestens ein verbindungselementseitiges Eingriffselement auf, das in die Eingriffsnut des Verbindungselements eingreift. Das verbindungselementseitige Eingriffselement des Halteelements kann sich in der Eingriffsnut auch beim Verpressvorgang ungehindert bewegen. Aufgrund der runden Form von Verbindungselement und Halteelement reicht bereits eine geringe Eindringtiefe des verbindungselementseitigen Eingriffselements in die Eingriffsnut aus, wodurch eine einfache Konfektionierung gewährleistet ist. Diesbezüglich kann es auch günstig sein, wenn die Eingriffsnut in einer Erhöhung am Verbindungselement ausgebildet ist, die den axialen Abschluss des Stützkörpers bildet. So lässt sich die Eingriffsnut in einfacher Weise in das Verbindungselement integrieren.

Es kann sich auch als günstig erweisen, wenn das Halteelement ein quetschhülsenseitiges Eingriffselement aufweist, das mit einer kooperierenden Aufnahme der Quetschhülse in Eingriff befindlich ist. Dadurch ist die Quetschhülse im vorkonfektioniert Zustand des erfindungsgemäßen Verbindungselementsystems ist relativ beweglich über das Halteelement mit dem Verbindungselement verbunden. Dies trägt entscheidend zur leichten Einführbarkeit des Rohrendes auch bei einer starken Exzentrizität des Rohrendes, wodurch die Montage der Rohrverbindung erleichtert wird.

Es kann auch hilfreich sein, wenn das verbindungselementseitige Eingriffselement als eine Mehrzahl von entlang eines Innenumfangs des Halteelements angeordneter Einzelelemente ausgebildet ist. Diese einzelnen Elemente sind vorzugsweise als Einzelfederelemente ausgebildet. Dadurch greift das verbindungseitige Eingriffselement federnd am Verbindungselement ein, was der Verbindung eine gewisse Flexibilität verleiht. Dies ermöglicht auch ein leichteres Konfektionieren des erfindungsgemäßen Verbindungselementsystems. Darüber hinaus ermöglicht die Ausgestaltung mit Federelementen eine definierte Beweglichkeit des Halteelements und somit der Innenhülse. Letztlich bewirken die Federelemente auch, dass ggf. auftretende Fertigungsschwankungen durch das erfindungsgemäße Verbindungselementsystem besser kompensiert werden können.

Es kann auch nützlich sein, wenn die Eingriffsnut des Verbindungselements eine Nutschräge aufweist. Durch eine derartige Nutschräge kann vermieden werden, dass beim Konfektionieren ein zu weites Aufschieben des Halteelements auf das Verbindungselement vermieden wird. Darüber hinaus bewirkt die Nutschräge, dass das Halteelement auch im Betrieb nicht vom Stützkörper weggeschoben werden kann, weil beim radialen Zusammenpressen der Innenhülse oder aufgrund thermischer Ausdehnung, beispielsweise im Betrieb, eine Längenänderung der Innenhülse auftreten kann, die dann auf das Haltelement einwirken könnte.

Es kann auch von Nutzen sein, wenn die Quetschhülse aus einem elastisch verformbaren polymeren Material ausgebildet ist. Dadurch wird die Stabilität der erfindungsgemäßen Rohrverbindung weiter erhöht.

In bevorzugten Ausführungsformen der vorliegenden Erfindung umfasst das erfindungsgemäße Verbindungselementsystem weiter eine Außenhülse zur Fixierung der Quetschhülse auf dem Stützkörper des Verbindungselements. Durch die Außenhülse fixiert die Quetschhülse auf dem Stützkörper und drückt das Rohrende in die umlaufenden Außenrippen des Stützkörpers. Dadurch wird die Dichtheit der erfindungsgemäßen Rohrverbindung gewährleistet. Darüber hinaus wird die Quetschhülse in Richtung des Stützkörpers gedrückt, sodass die Quetschhülse den Kontakt zum Halteelement verliert und in der fertig gebildeten erfindungsgemäßen Rohrverbindung dieses nicht mehr berührt.

Es versteht sich, dass beim Vorhandensein mehrerer Stützkörper an einem Verbindungselement jedem Stützkörper des Verbindungselements eine Quetschhülse zugeordnet werden kann, die über ein Halteelement mit dem Verbindungselement mittelbar verbunden ist. In bevorzugten Ausführungsformen der vorliegenden Erfindung ist jeder Stützkörper des Verbindungselements erfindungsgemäß mit einer Quetschhülse über ein Halteelement verbunden.

Hinsichtlich der erfindungsgemäßen Rohrverbindung kann es von Nutzen sein, wenn das Halteelement nicht mit der Quetschhülse und/oder der Außenhülse in Kontakt steht. Dadurch kann ein beliebiges, geeignetes Material für das Halteelement zum Einsatz kommen, insbesondere ein Material, das während des Einsatzes der erfindungsgemäßen Rohrverbindung beim Kontakt zur Quetschhülse und/oder zur Außenhülse eine chemische Reaktion eingeht.

Die Kontaktfreiheit zwischen der Außenhülse und dem Halteelement wird in bevorzugten Ausführungsformen der erfindungsgemäßen Rohrverbindung dadurch begünstigt, dass die dem Stützkörper abgewandte Seite des quetschhülsenseitigen Eingriffselements zumindest abschnittweise im Wesentlichen parallel zu einer Einführungsschräge der Außenhülse verläuft.

Erfindungsgemäß ist die Außenhülse als Schiebehülse zum axialen Aufschieben auf die Quetschhülse ausgebildet. Die resultierende Schiebhülsenverbindung hat eine hohe Dichtheit und verfügt über eine hohe Verbindungssicherheit. Das Aufschieben der Schiebehülse auf die Quetschhülse führt zu einer Aufweitung der Schiebehülse, wodurch diese eine radial nach innen gerichtete Kraft auf die Quetschhülse ausübt. Diese Kraft wird auf das Rohr übertragen, das gegen den mit umlaufenden Außenrippen versehenen Stützkörper drückt, wodurch eine dauerhaft dichte Verbindung zwischen dem Rohr und dem Verbindungselement ausgebildet wird. Bevorzugt umfasst die Quetschhülse mindestens einen zylindrischen Abschnitt. Der zylindrische Abschnitt führt zu einer reduzierten Neigung der Quetschhülse zu einer axialen Relativbewegung (beispielsweise aufgrund einer Temperaturwechselbeanspruchung). Dieser mindestens eine zylindrische Abschnitt erstreckt sich bevorzugt insgesamt über einen Großteil ihrer Länge, vorzugsweise über mindestens 60 % der Länge der Quetschhülse, besonders bevorzugt über mindestens 75 % der Länge der Quetschhülse. Alternativ oder zusätzlich dazu kann die Quetschhülse eine axiale Schlitzung und/oder eine Konturierung umfassen, durch die die Ringsteifigkeit der Quetschhülse reduziert und das Aufschieben der Schiebehülse auf die Quetschhülse erleichtert wird sowie auch die Kraftübertragung von der Schiebehülse auf das Rohrende verbessert wird. An ihrer Innenoberfläche kann die Quetschhülse eine innenseitige Oberflächenstruktur oder -kontur aufweisen, welche dazu geeignet ist, eine mögliche axiale Relativbewegung der Quetschhülse auf dem Rohr, z. B. durch Temperaturwechselbeanspruchung, zu verhindern. Ebenso kann die Außenoberfläche der Quetschhülse eine Oberflächenstruktur oder -kontur aufweisen, welche dazu geeignet ist, eine mögliche axiale Relativbewegung der Außenhülse, z. B. durch Temperaturwechselbeanspruchung, zu verhindern. Alternativ oder zusätzlich dazu kann die Außenoberfläche der Quetschhülse eine Oberflächenstruktur oder Oberflächenkontur aufweisen, die sich dazu eignet, die Aufschiebbarkeit der Außenhülse zu verbessern (z. B. Reduzierung der Verpresskraft, Reduzierung von Geräuschen während der Verbindungsherstellung). Um diese Oberflächeneigenschaften zu erzielen, kann die Innenoberfläche der Außenhülse und/oder die Außenoberfläche der Quetschhülse einen Mittenrauwert Rₐ in einem Bereich von 1 µm bis zur Hälfte der mittleren Wandstärke der Außenhülse und/oder eine gemittelte Rautiefe R_{z} in einem Bereich von 5 µm bis zur Hälfte der mittleren Wandstärke der Außenhülse aufweisen und/oder eine Mehrzahl von makroskopischen Unebenheiten aufweisen, deren Tiefe die Hälfte der mittleren Wandstärke der Außenhülse nicht übersteigen sollte. Dabei bedeutet der der Begriff "Mittenrauwert" oder "mittlere Rauheit" (dargestellt durch das Symbol "Rₐ") einer Oberfläche wie hierin verwendet das arithmetische Mittel der betragsmäßigen Abweichungen aller Messpunkte auf der Oberfläche von der Mittellinie der Oberfläche und der der Begriff "gemittelte Rautiefe" (dargestellt durch das Symbol "R_{z}") einer Oberfläche bedeutet wie hierin verwendet die Rautiefe gemäß DIN EN ISO 4287/4288. Hinsichtlich der Oberflächeneigenschaften der Innenoberfläche und der Außenoberfläche der Quetschhülse sowie der Innenoberfläche der Außenhülse soll auf die DE 10 2015 122 345 A1 verwiesen werden, auf die hiermit explizit Bezug genommen wird. Ebenso kann die Quetschhülse an ihrer Außenseite beispielsweise mindestens eine Rippe, insbesondere in Dreiecks- oder Rechtecksform umfassen. Zusätzlich dazu kann die Außenoberfläche der Quetschhülse mit einer Beschichtung versehen sein, um die Aufschiebbarkeit der Schiebehülse zu verbessern (z. B. Reduzierung der Verpresskraft, Reduzierung von Geräuschen während der Verbindungsherstellung).

Ebenso kann es von Nutzen sein, wenn das Rohrende einen im Vergleich zum regulären Innendurchmesser (d.h. dem Innendurchmesser, den das Rohr nach der Extrusion im Wesentlichen über dessen gesamte Rohrlänge besitzt) im Wesentlichen identischen Innendurchmesser besitzt oder einen gegenüber dem regulären Innendurchmesser erweiterten Innendurchmesser besitzt. Bevorzugt ist es jedoch, wenn das Rohrende einen im Vergleich zum regulären Innendurchmesser des Rohres im Wesentlichen identischen Durchmesser besitzt. Wie hierin verwendet bedeutet der Begriff "ein im Vergleich zum regulären Innendurchmesser im Wesentlichen identischen Innendurchmesser", dass der Innendurchmesser des Rohrendes nicht durch einen separaten Aufweitvorgang unter Verwendung eines sogenannten Aufweitwerkzeugs erweitert wurde. Dabei kann es sehr wohl sein, dass der Innendurchmesser des Rohrendes durch das Einschieben des Stützkörpers des Verbindungselements geringfügig, beispielsweise um bis zu etwa 5 %, gegenüber dem regulären Innendurchmesser erhöht ist oder das Rohrende in der erfindungsgemäßen Rohrverbindung durch die Einwirkung der axial aufgeschobenen Schiebehülse zusammengestaucht ist, so dass der Innendurchmesser des Rohrendes geringfügig, beispielsweise um bis zu etwa 10 %, gegenüber dem regulären Innendurchmesser reduziert ist. Im Falle einer erfindungsgemäßen Rohrverbindung, bei der das Rohrende einen im Vergleich zum regulären Innendurchmesser im Wesentlichen identischen Innendurchmesser besitzt, ist das Verfahren zu deren Erzeugung stark vereinfacht, weil der Schritt des Aufweitens des Rohrendes entfällt. Weist das Rohrende einen gegenüber dem regulären Innendurchmesser erweiterten Innendurchmesser auf, verfügt die erfindungsgemäße Rohrverbindung wegen des Memory-Gedächtnisses des Rohrmaterials über eine verbesserte Dichtheit und Verbindungssicherheit.

Gemäß der vorliegenden Erfindung kommen als bevorzugte Materialien für das Verbindungselement polymere Werkstoffe wie beispielsweise Polypropylen und glasfaserverstärktes Polypropylen, Polyamide und glasfaserverstärkte Polyamide, temperaturbeständige Thermoplaste wie Polyphenylsulfon (PPSU), Polyvinylidenfluorid (PVDF), Polyethersulfon (PES), Polysulfon (PSU), Polyphenylensulfid (PPS), Acrylnitril-Butadien-StyrolCopolymerisat (ABS), Polyoxymethylen (POM) und Polyestercarbonat (PESC) sowie Copolymere und Blends dieser Polymere, wobei diese Polymermaterialien auch faserverstärkt, insbesondere glasfaserverstärkt zum Einsatz kommen können, sowie metallische Werkstoffe wie beispielsweise Messing, insbesondere Ecobrass^{®}, Rotguss und Edelstahl zum Einsatz. Temperaturbeständige Thermoplaste wie insbesondere Polyphenylsulfon und Polyvinylidenfluorid sind zur Herstellung des erfindungsgemäßen Verbindungselements besonders bevorzugt. Der Begriff "temperaturbeständige Thermoplaste", wie er hierin verwendet wird, bezieht sich auf die Wärmeformbeständigkeit und Thermostabilität dieser Werkstoffgruppe und bezeichnet thermoplastische Polymermaterialien mit einer Wärmeformbeständigkeit bei Temperaturen von mindestens von 150°C. Die Obergrenze der Temperatur, bei der ein derartiger temperaturbeständiger Kunststoff einsetzbar ist, ist vom verwendeten Material abhängig, wobei die Einsetzbarkeit derartiger Polymermaterialien bei maximal 260°C endet.

Gemäß der vorliegenden Erfindung kommen als Kunststoffrohre Vollkunststoffrohre, bevorzugt aus Polyethylen (PE, insbesondere PE 100 und PE-RT (Polyethylen mit erhöhter Temperaturbeständigkeit)), vernetztem Polyethylen (PE-X, insbesondere PE-Xa, PE-Xb und PE-Xc), Polypropylen (insbesondere statistischem Polypropylen PP-R) und Polybutylen (PB); sowie Kunststoff-Verbundrohre, bevorzugt mit Schichten aus Polyethylen (PE, insbesondere PE 100 und PE-RT), vernetztem Polyethylen (PE-X, insbesondere PE-Xa, PE-Xb und PE-Xc), Polypropylen (insbesondere statistischem Polypropylen PP-R), und/oder Polybutylen (PB) sowie Metall-Kunststoff-Verbundrohre (MKV-Rohre) zum Einsatz. Als Sauerstoffsperrschicht kann zusätzlich eine Schicht aus Ethylen-Vinylalkohol-Copolymer (EVOH) vorhanden sein. Metall-Kunststoff-Verbundrohre (MKV-Rohre) umfassen gemäß der vorliegenden Erfindung bevorzugt Schichten aus Polyethylen (PE, insbesondere PE 100 und PE-RT), vernetztem Polyethylen (PE-X, insbesondere PE-Xa, PE-Xb und PE-Xc), Polypropylen (insbesondere statistischem Polypropylen PP-R) und/oder Polybutylen (PB) und mindestens eine Schicht aus Metallen, vorzugsweise Aluminium. Die Metallschicht ist vorzugsweise stumpfgeschweißt. Bei Kunststoff-Verbundrohren und MKV-Rohren können zwischen einzelnen Schichten Haftvermittlerschichten eingebracht sein. Gemäß der vorliegenden Erfindung können alle Rohre einer erfindungsgemäßen Rohrverbindung identisch aufgebaut sein oder eines oder mehrere der Rohre können unterschiedliche Rohraufbauten aufweisen. Darüber hinaus können die Rohre gemäß der vorliegenden Erfindung auch faserverstärkt sein. Die Faserverstärkung der Leitungsrohre kann in einzelnen oder in allen Rohren, über die gesamte Rohrlänge oder auch nur in Abschnitten, vorhanden sein. Hinsichtlich des Kunststoffrohres oder des Metall-Kunststoff-Verbundrohres der erfindungsgemäßen Rohrverbindung ist es besonders bevorzugt, dass mindestens eine Schicht des jeweiligen Rohres vernetztes Polyethylen (insbesondere PE-Xa, PE-Xb und PE-Xc) umfasst. Der Werkstoff "vernetztes Polyethylen" ist ein Werkstoff, der über ein Formgedächtnis bzw. einen sog. "Memory-Effekt" verfügt. Dieser Memory-Effekt liegt darin, dass das vernetzte Polyethylen nach einer Veränderung seiner äußeren Geometrie versucht, wieder in seine ursprüngliche Form zurückzukehren. Beim Aufweiten von Rohren führt dies dazu, dass ein PE-X-umfassendes Rohr nach dem Aufweiten wieder versucht, den Rohrinnendurchmesser vor dem Aufweiten zu erreichen. Da nach dem Aufweiten ein Stützkörper eines Verbindungselements in das aufgeweitete Rohrende eingesetzt wird, führt der Memory-Effekt beim Einsatz eines Rohres, das zumindest eine Schicht mit vernetztem Polyethylen umfasst, zu einer besonders hohen Dichtheit der erfindungsgemäßen Rohrverbindung.

Bei dem Verbindungselement kann es sich um ein Gewindeformteil oder um ein gewindeloses Formteil, also um ein Verbindungselement, das kein Gewinde aufweist, handeln. Dies beinhaltet insbesondere Anschlussstücke, Anschlusswinkel, Mehrfachverteiler, T-Stücke, Wand-T-Stücke, Wandwinkel, Systemübergänge, Übergangsstücke, gewinkelte Übergangsstücke, die jeweils kein Gewinde aufweisen. Dementsprechend bezieht sich der Begriff "Gewindeformteil" auf ein Verbindungselement, das mindestens ein Gewindeformteil besitzt. Dies beinhaltet insbesondere Anschlusstücke, Anschlusswinkel, Mehrfachverteiler, T-Stücke, Wand-T-Stücke, Wandwinkel, Systemübergänge, Übergangsstücke und gewinkelte Übergangsstücke, die jeweils mindestens ein Innen- und/oder Außengewinde aufweisen.

Erfindungsgemäß eignen sich als Materialien für das Halteelement, die Außenhülse und/oder die Quetschhülse vorzugsweise diejenigen Materialien, die in Bezug auf das Verbindungselement der erfindungsgemäßen Rohrverbindung genannt sind. Temperaturbeständige Kunststoffe und insbesondere Polyphenylsulfon, Polyvinylidenfluorid, Polypropylen, Polyamide (PA) und Polyoxymethylen (POM) sind als Materialien für die Außenhülse und/oder die Quetschhülse besonders bevorzugt. Vernetztes Polyethylen (insbesondere PE-Xa, PE-Xb und PE-Xc) ist als Material für die Außenhülse und/oder die Quetschhülse ebenfalls besonders bevorzugt. Für das Halteelement sind insbesondere Materialien besonders geeignet, die eine höhere Steifigkeit besitzen, wie z.B. Polyoxymethylen, insbesondere mit Glasfasern, Polyamide, insbesondere mit Glasfasern, Polypropylen mit Glasfasern, Polyvinylidenfluorid (PVDF), Polyphenylsulfon (PPSU) und dergleichen.

Besonders bevorzugt ist es, wenn das Material des Verbindungselements eine höhere Steifigkeit als die Materialien der Quetschhülse, der Außenhülse und des Rohrs besitzt. Weiter ist es bevorzugt, wenn das Material der Quetschhülse eine höhere Steifigkeit als die Materialien der Außenhülse und des Rohrs besitzt. Ebenso ist es bevorzugt, wenn das Material der Außenhülse eine höhere Steifigkeit als das Material des Rohrs besitzt.

In Bezug auf das erfindungsgemäße Verfahren zur Herstellung einer Rohrverbindung kann es bevorzugt sein, wenn beim axialen Aufschieben der Außenhülse auf das Rohrende die Quetschhülse derart gegen das Rohrende gedrückt wird, dass das quetschhülsenseitige Eingriffselemente keine Kontaktstellen mit der Quetschhülse aufweist. Das axiale Aufschieben der Außenhülse auf das Rohrende geschieht, indem die Außenhülse auf die Quetschhhülse aufgeschoben wird. So ist gewährleistet, dass zwischen der Quetschhülse und dem Halteelement keine Berührungsstellen vorliegen. Auf diese Weise wird eine ungleichmäßige radiale Verformung vermieden, so dass eine Tendenz der Außenhülse zur Migration auf der Quetschhülse während des Betriebs der erfindungsgemäßen Rohrverbindung weitgehend unterdrückt wird. Darüber hinaus ermöglicht dies auch, dass auch zwischen der Außenhülse und dem Halteelement in der fertigen Verbindung kein Kontakt besteht, d.h. dass die Außenhülse nicht an dem Halteelement anliegt.

Es kann auch hilfreich sein, wenn das axiale Aufschieben der Außenhülse auf das Rohrende unter Verwendung eines Verpresswerkzeugs mit mindestens zwei Verpressjochen erfolgt, wobei ein Verpressjoch während des Aufschiebens an dem Halteelement anliegt. So wird ein zuverlässiges anliegendes Verbrechenjoch gewährleistet wobei auf einen Verpresskragen am Verbindungselement verzichtet werden kann. Auch hier erfolgt das axiale Aufschieben der Außenhülse auf das Rohrende, indem die Außenhülse auf die Quetschhhülse aufgeschoben wird. Dadurch kann die Zykluszeit beim Herstellen des Verbindungselements reduziert werden, was die Herstellungskosten für das Verbindungselement signifikant reduziert. Außerdem kann für das Halteelement ein zum Verbindungselement unterschiedliches und ggf. günstigeres Material verwendet werden, das z.B. eine hohe Steifigkeit besitzt, aber hohen Anforderungen an Langzeittemperaturbeständigkeit oder Kriechverhalten nicht genügt, wobei in bevorzugten Ausführungsformen der vorliegenden Erfindung diese Anforderungen für Materialien für das Verbindungselement vorliegen.

Es kann auch günstig sein, wenn der Außendurchmesser des Halteelements im Wesentlichen dem Außendurchmesser der Außenhülse in der erfindungsgemäßen Rohrverbindung entspricht. Durch diese Maßnahme ist gewährleistet, dass die Verpressjoche eines beim Erzeugen der erfindungsgemäßen Rohrverbindung eingesetzten Verpresswerkzeugs sowohl am Halteelement als auch an der Außenhülse angesetzt werden können, sodass Fehler beim Erzeugen der erfindungsgemäßen Rohrverbindung verhindert werden können.

Die erfindungsgemäße Rohrverbindung gemäß der vorliegenden Erfindung wird insbesondere in Leitungs- und Anschlusssystemen in der Trinkwasserinstallation, in Sprinkleranlagen, in Heizkörperanbindungen, in Betonkerntemperierungen sowie in Flächenheizungs- und/oder Flächenkühlungssystemen eingesetzt.

Die erfindungsgemäße Rohrverbindung sowie einzelne Teile davon können auch zeilenweise oder schichtweise unter Verwendung eines zeilenaufbauenden oder schichtaufbauenden Fertigungsverfahrens (z. B. 3D-Druck) hergestellt werden. Bevorzugt ist es jedoch, wenn das Rohr mittels Extrusion hergestellt wird. Ebenso ist es bevorzugt, wenn das Verbindungselement, die Außenhülse und/oder die Quetschhülse mittels Spritzguss hergestellt werden.

Im Folgenden soll die Erfindung unter Bezugnahme auf die in den Figuren dargestellten Ausführungsformen im Detail erläutert werden. Dabei zeigt:
Fig. 1 eine partielle Querschnittsdarstellung eines Verbindungselementsystems gemäß einer Ausführungsform der vorliegenden Erfindung;
Fig. 2 eine partielle Querschnittsdarstellung der in gemäß Fig. 1 dargestellten Ausführungsform des erfindungsgemäßen Verbindungselementsystems mit eingesetztem Rohrende;
Fig. 3 eine partielle Querschnittsdarstellung einer Ausführungsform der erfindungsgemäßen Rohrverbindung die das in Fig. 1 und Fig. 2 dargestellte erfindungsgemäße Verbindungselementsystem umfasst; und
Fig. 4 eine vergrößerte Detaildarstellung aus Fig. 3.

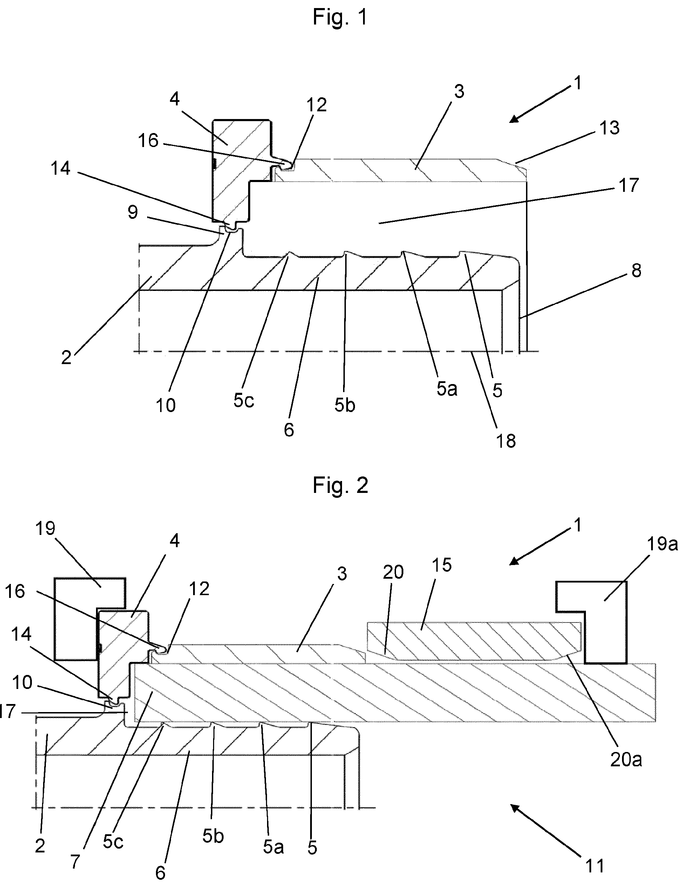

In Fig. 1 ist eine Ausführungsform eines erfindungsgemäßen Verbindungselementsystems 1 in einer partiellen Querschnittsdarstellung gezeigt. In der in Fig. 1 dargestellten Ausführungsform umfasst das erfindungsgemäße Verbindungselementsystem 1 ein Verbindungselement 2, eine Quetschhülse 3 sowie ein Halteelement 4. Das Halteelement 4 ist sowohl mit dem Verbindungselement 2 als auch mit der Quetschhülse 3 in Eingriff befindlich. Dadurch ist die Quetschhülse 3 auf dem Verbindungselement 2 über das Halteelement 4 vorkonfektioniert.

Das Verbindungselement 2 umfasst einen mit umlaufenden Außenrippen 5, 5a, 5b, 5c versehenen Stützkörper 6 zum Einführen in ein Rohrende 7 (Fig. 2). An der dem offenen Ende 8 des Stützkörpers 6 gegenüberliegenden Seite weist der Stützkörper 6 eine Erhöhung 9 auf, in dereine Eingriffsnut 10 angeordnet ist. Dabei bildet die Erhöhung 9 den Abschluss des Stützkörpers 6 des Verbindungselements 2. In der in Fig. 1 dargestellten Ausführungsform ist die Erhöhung 9 nicht hoch genug ausgebildet, damit sie als Verpresskragen zur Anlage von Verpressjochen 19 ,19a eines Werkzeugs beim Erzeugen einer erfindungsgemäßen Rohrverbindung 11 (Fig. 2) fungieren könnte. In dieser Ausführungsform stellt die Erhöhung also keinen umlaufenden Verpresskragen dar. In alternativen Ausführungsformen der vorliegenden Erfindung kann diese Erhöhung 9 aber in einer geeigneten Höhe und einer geeigneten Materialstärke ausgebildet sein, damit daran bei der Herstellung einer erfindungsgemäßen Rohrverbindung das Verpresswerkzeug angreifen kann.

Die umlaufenden Außenrippen 5, 5a, 5b, 5c sind in der in Fig. 1 dargestellten Ausführungsform der vorliegenden Erfindung sägezahnförmig ausgebildet sind. Dabei ist der Winkel, in dem die dem offenen Ende 8 des Stützkörpers 6 nächste umlaufende Außenrippe 5 gegen eine zentrale Achse 18 des Stützkörpers 6 geneigt ist, kleiner als der Winkel, in dem die dieser Außenrippe 5 benachbarte umlaufende Außenrippe 5a gegen die zentrale Achse 18 geneigt ist. Der Neigungswinkel nimmt von der Außenrippe 5 zur umlaufenden Außenrippe 5c vom offenen Ende 8 des Stützkörpers 6 ausgehend stetig zu. Dadurch kann die beispielsweise durch das Ablängen des Rohrs auftretende Exzentrizität des Rohrendes 7 durch die umlaufenden Außenrippen 5, 5a, 5b, 5c mit verschieden großen Neigungswinkeln beim Aufschieben auf den Stützkörper 6 des Verbindungselements 2 reduziert werden, was das Einstecken des Stützkörpers 6 in das Rohrende 7 erleichtert.

In der in Fig. 1 dargestellten Ausführungsform handelt es sich bei dem Verbindungselement 2 um ein Bauteil aus Messing, insbesondere entzinkungsbeständigem Messing. In alternativen Ausführungsformen des Verbindungselements 2 können auch andere metallische Werkstoffe wie Ecobrass^{®}, Rotguss (besonders bevorzugt der in der WO 2017/167441 A2 beschriebene Rotguss) und Edelstahl, oder Kunststoffmaterialien wie beispielsweise Polypropylen, glasfaserverstärktes Polypropylen, Polyamide, glasfaserverstärkte Polyamide, Polyvinylidenfluorid (PVDF), Polyethersulfon (PES), Polyphenylsulfon (PPSU), Polysulfon (PSU), Polyphenylensulfid (PPS), Acrylnitril-Butadien-StyrolCopolymerisat (ABS) und Polyestercarbonat (PESC) sowie Copolymere und Blends dieser Polymere, wobei diese Polymermaterialien auch faserverstärkt, insbesondere glasfaserverstärkt zum Einsatz kommen können, eingesetzt werden. Im Falle metallischer Materialien kommen Gießverfahren, wie zum Beispiel Sandguss und Kokillenguss, Schmiedeverfahren, wie zum Beispiel Warmschmieden, sowie Drehverfahren zum Einsatz.

Die Quetschhülse 3 besitzt eine im Wesentlichen hohlzylindrische Form auf. An ihrer Außenoberfläche (der dem Stützkörper 6 des Verbindungselements 2 abgewandte Oberfläche) ist eine Aufnahme 12 ausgebildet. Diese Aufnahme 12 befindet sich in der in Fig. 1 dargestellten Ausführungsform an dem dem offenen Ende 8 des Verbindungskörpers 2 abgewandten Ende der Quetschhülse 3. In alternativen Ausführungsformen kann die Aufnahme 12 auch in Richtung der Mitte der Quetschhülse 3 in axialer Richtung verschoben angeordnet sein. Die Quetschhülse 3 weist eine als Schräge ausgebildete Einsteckhilfe 13 auf. Insgesamt ist die Quetschhülse 3 in der gezeigten Ausführungsform als Spritzgussteil aus PVDF ausgebildet. In axialer Richtung kann die Quetschhülse 3 Längsschlitze aufweisen, die zur Verformbarkieit der Quetschhülse 3 in radialer Richtung beitragen.

Die Verbindung zwischen dem Verbindungselement 2 und der Quetschhülse 3 erfolgt über das als separates Bauteil ausgebildete Halteelement 4. In der in Fig. 1 dargestellten Ausführungsform handelt es sich um ein durch Spritzguss hergestelltes, ringförmiges Bauteil aus Polyoxymethylen (POM). An seiner dem Verbindungselement 2 zugewandten Seite weist das Halteelement 4 ein verbindungselementseitiges Eingriffselement 14 auf, dass in der in Fig. 1 dargestellten Ausführungsform radial nach innen in Richtung des Verbindungselements 2 weist. In dieser Ausführungsform ist das verbindungselementseitige Eingriffselement 14 als Eingriffsnase ausgebildet. In der in Fig. 1 dargestellten Ausführungsform der vorliegenden Erfindung ist das verbindungselementseitige Eingriffselement 14 umlaufend ausgebildet. Alternativ dazu ist es auch denkbar, dass es sich um mehrere verbindungselementseitige Eingriffselemente 14 handelt, die um den Innenumfang des Verbindungselements 2 verteilt, insbesondere gleichmäßig über den Innenumfang verteilt, angeordnet sind. In besonders bevorzugten Ausführungsformen kann das verbindungselementseitige Eingriffselement 14 auch ein gewisses Maß an Elastizität besitzen. Dadurch greift das verbindungseitige Eingriffselement 14 federnd am Verbindungselement 2 ein, was der erfindungsgemäßen Verbindung 11 eine gewisse Flexibilität verleiht.

Das verbindungselementseitige Eingriffselement 14 greift in die Eingriffsnut 10 am Stützkörper 6 des Verbindungselement 2 ein. Dabei ist die Materialstärke des verbindungselementseitigen Eingriffselements 14 etwas geringer als der Abstand zwischen den Nutstegen der Eingriffsnut 9. So kann das verbindungselementseitige Eingriffselement 14 des Halteelements 4 in die Eingriffsnut 10 des Verbindungselements 2 eingreifen und ist dort in radialer Richtung beweglich geführt. Aufgrund der runden Form der Verbindung zwischen dem Verbindungselement 2 und dem Halteelement 4 reicht bereits eine geringe Eindringtiefe des verbindungselementseitigen Eingriffselements 14 in die Eingriffsnut 10 aus, wodurch eine einfache Konfektionierung gewährleistet ist. Darüber hinaus lässt sich die Quetschhülse 3 senkrecht zur Mittelachse 18 des Verbindungselements 2 bewegen. Dies erleichtert die Einsteckbarkeit des Rohrendes 7 (Fig. 2), da eine eventuell vorhandene Exzentrizität des Rohres ausgeglichen werden kann. Weiter wird durch die Beweglichkeit des verbindungselementseitigen Eingriffselements 14 in der Eingriffsnut 10 eine im verpressten Zustand der erfindungsgemäßen Rohrverbindung 11 sowie durch die später zu beschreibende Verbindung des Halteelements 4 mit der Quetschhülse 3 eine gleichmäßige radiale Verformung der Quetschhülse 3 über die gesamte Längsachse gewährleistet. Dies bewirkt neben einer verbesserten Abdichtung über die gesamte Stützkörperlänge auch, dass sich die Quetschhülse 3 und die Außenhülse 15 in einem Gleichgewichtszustand befinden, wodurch eine axiale Relativbewegung der Außenhülse 15 (Fig. 2) verhindert wird.

In Richtung der Quetschhülse 3 weist das Halteelement 4 ein quetschhülsenseitiges Eingriffselement 16 auf. In der in Fig. 1 dargestellten Ausführungsform ist das quetschhülsenseitige Eingriffselement 16 als umlaufendes Rastelement ausgebildet. In alternativen Ausführungsformen kann das quetschhülsenseitige Eingriffselement 16 auch mehrteilig ausgebildet sein, wobei die einzelnen Elemente umlaufende, insbesondere gleichmäßig umlaufend, um den Umfang des Halteelements 4 angeordnet sind. Das quetschhülsenseitige Eingriffselement 16 befindet sich im Eingriff mit der Aufnahme 12 der Quetschhülse 3. In der in Fig. 1 dargestellten Ausführungsform der vorliegenden Erfindung ist das als umlaufende Rastelement ausgebildete quetschhülsenseitige Eingriffselement 16 mit der Aufnahme 12 der Quetschhülse 3 verrastet. Dabei steht das quetschhülsenseitige Eingriffselement 16 in direktem Kontakt mit der Quetschhülse 3.

Auf diese Weise ist das Verbindungselement 2 mit der Quetschhülse 3 über das Halteelement 4 konfektioniert und kann als ein gemeinsames Bauteil an die Baustelle geliefert werden.

Zwischen dem Stützkörper 6 und der Quetschhülse 3 ist ein Hohlraum 17 ausgebildet, der zur Aufnahme eines Rohrendes 7 eines Kunststoffrohrs oder eines Metall-Kunststoff-Verbundrohrs ausgebildet ist. In axialer Richtung wird der Hohlraum 17 durch das Halteelement 4 begrenzt. In Fig. 2, die eine Ausführungsform einer erfindungsgemäßen Rohrverbindung 11 mit dem in Fig. 1 dargestellten erfindungsgemäßen Verbindungselementsystem 1 vor dem Aufbringen der Außenhülse 15 auf die Quetschhülse 3 in einer partiellen Querschnittsdarstellung zeigt, ist das Rohrende 7 eines Vollkunststoffrohrs in den Hohlraum 17 zwischen dem Stützkörper 6 und der Quetschhülse 3 eingebracht. Das verbindungselementseitige Eingriffselement 14 kann sich in der Eingriffsnut 10 auch beim Verpressvorgang ungehindert bewegen.

Zur Fixierung des Rohrendes 7 auf dem Stützkörper 6 wird die Außenhülse 15 eingesetzt, die in der dargestellten Ausführungsform als Schiebehülse ausgebildet. Gemäß der in Fig. 2 gezeigten Ausführungsform ist die Außenhülse 15 eine Hülse aus Polyvinylidenfluorid (PVDF), die im Wesentlichen über ihre gesamte Länge einen gleichbleibenden Querschnitt aufweist und lediglich an beiden Enden jeweils eine Einführungsschräge 20, 20a aufweist. Alternativ können auch Außenhülsen 15 auch aus anderen Materialien, insbesondere vorteilhafterweise aus vernetztem Polyethylen (insbesondere PE-Xa, PE-Xb oder PE-Xc), verwendet werden. In dieser Ausführungsform weist die Außenhülse 15 eine Innenoberfläche mit einem Mittenrauwert Rₐ in einem Bereich von 4 µm auf. Die Außenhülse 15 mit höherer Rauheit der Innenoberfläche zeigt eine verringerte Tendenz zu einer Relativbewegung der Außenhülse 15 auf dem Rohrende 7, insbesondere bei Temperaturwechselbeanspruchung.

Zur Erzeugung der erfindungsgemäßen Rohrverbindung 11 wird zunächst die Außenhülse 14 über das Rohrende 7 des Kunststoffrohres geschoben. Dazu wird ein Verpresswerkzeug bzw. Schiebewerkzeug eingesetzt, dass zwei axial zueinander bewegbare Verpressjoche 19, 19a aufweist. Zum Aufschiebvorgang wird ein Verpressjoch 19 an der dem Rohrende 7 abgewandten Seite des Halteelements 4 angelegt, während das andere Verpressjoch 19a an der dem Rohrende 7 abgewandten Seite der Außenhülse 15 anliegt. Dann werden die Verpressjoche 19, 19a aufeinander zu bewegt, wodurch die als Schiebehülse ausgebildete Außenhülse 15 in axialer Richtung auf die Quetschhülse 3 aufgeschoben wird, um das Rohrende 7 am Stützkörper 6 zu fixieren.

Durch das Aufschieben der Außenhülse 15 wird die Quetschhülse 3 komprimiert und das Material des Rohrendes 7 gegen den Stützkörper 6 des Verbindungselement 2 gepresst. Dadurch arbeiten sich die sägezahnförmigen umlaufenden Außenrippen 5, 5a, 5b, 5c des Stützkörpers 6 in das Material des Rohrendes 7, wodurch die Dichtigkeit der erfindungsgemäßen Rohrverbindung 11 erzielt wird.

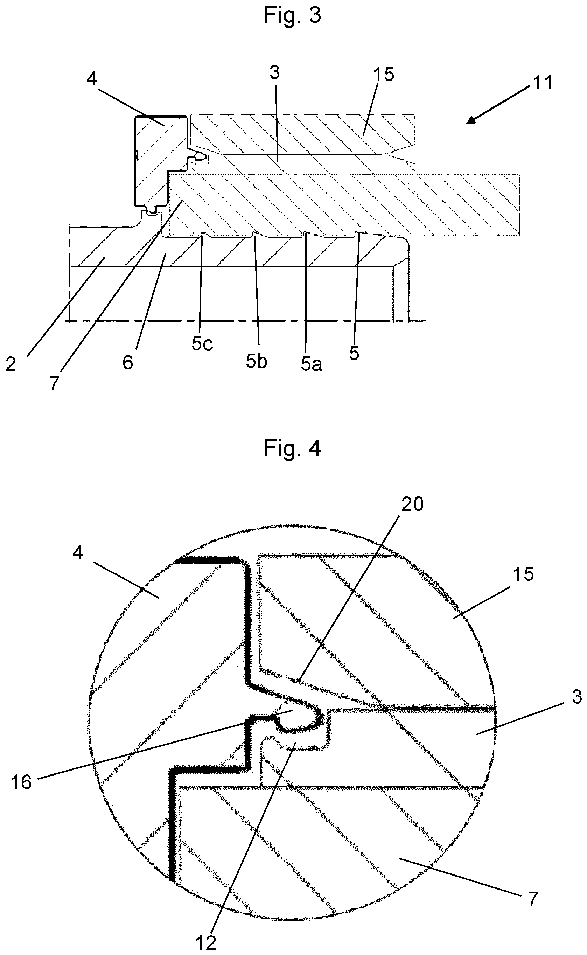

Durch das Komprimieren der Quetschhülse 3 beim Aufschieben der Außenhülse 15 wird der Kontakt zwischen dem quetschhülsenseitigen Eingriffselement 16 und der Aufnahme 12 der Quetschhülse 3 gelöst, was aus der vergrößerten Detaildarstellung gemäß Fig. 4 gut hervorgeht. Ebenso berührt das Halteelement 4 auch die Außenhülse 15 nicht. Dazu trägt bei, dass die der Außenhülse 15 zugewandte Seite des Halteelements 4 im Wesentlichen parallel zur Einführungsschräge 20 der Außenhülse 15 ausgebildet ist. Damit können auch weniger hochwertige Materialien für die Quetschhülse 3 eingesetzt werden.

Die resultierende erfindungsgemäße Rohrverbindung 11 ist in Fig. 3 in einer partiellen Querschnittsdarstellung gezeigt. Das Rohrende 7 weist in der in Fig. 3 gezeigten Ausführungsform einen im Wesentlichen konstanten Querschnitt auf. In alternativen Ausführungen kann auch ein aufgeweitetes Rohrende 7 in der erfindungsgemäßen Rohrverbindung 11 zum Einsatz kommen. Dazu wird nach dem Aufschieben der Außenhülse 15 über das Rohrende 7 ein Aufweitwerkzeug in das Rohrende 7 eingeführt und das Rohrende 7 wird mithilfe des Aufweitwerkzeugs aufgeweitet. Danach erfolgt ein Vorgehen, das dem beim Erzeugen einer erfindungsgemäßen Rohrverbindung 11 mit nicht aufgeweitetem Rohrende 7 entspricht. Erfindungsgemäß sind aber solche erfindungsgemäße Rohrverbindungen 11 mit nicht aufgeweitetem Rohrende 7 bevorzugt. In solchen Ausführungsformen wird das aufgeweitete Rohrende 7 in den Hohlraum 17 zwischen dem Stützkörper 6 und der Quetschhülse 3 eingebracht.

An ggf. vorhandene weitere Stützkörper 6 des Verbindungselements 2 können weitere Rohrenden 7 in der beschriebenen Weise unter Erzeugung weiterer erfindungsgemäßer Rohrverbindungen 11 angeschlossen werden. Das weitere Rohrende kann dabei einen zum Rohr des Rohrendes 7 des Stützkörpers 6 identischen Rohraufbau besitzen oder aber unterschiedlich zum Rohr des Rohrendes 7 des Stützkörpers 6 aufgebaut sein.

Bei dem Rohr des Rohrendes 7 handelt es sich gemäß der dargestellten Ausführungsform der vorliegenden Erfindung um ein Vollkunststoffrohr aus vernetztem Polyethylen (PE-X, insbesondere PE-Xa, PE-Xb oder PE-Xc). Alternativ dazu sind als Rohr in anderen Ausführungsformen der vorliegenden Erfindung auch Vollkunststoffrohre aus anderen Materialien sowie Kunststoff-Verbundrohre und Metall-Kunststoff-Verbundrohre verwendbar. Bevorzugt ist die dem lichten Durchmesser des Rohrs zugewandte Schicht im Fall von Kunststoffverbundrohren und Metall-Kunststoff-Verbundrohren jedoch eine Schicht aus vernetztem Polyethylen (PE-X), insbesondere PE-Xa, PE-Xb oder PE-Xc.

Bei dem Verbindungselement 2 kann es sich um ein Gewindeformteil oder um ein gewindeloses Formteil, also um ein Verbindungselement, das kein Gewinde aufweist, handeln. Dies beinhaltet insbesondere Anschlussstücke, Anschlusswinkel, Mehrfachverteiler, T-Stücke, Wand-T-Stücke, Wandwinkel, Systemübergänge, Übergangsstücke, gewinkelte Übergangsstücke, die jeweils kein Gewinde aufweisen. Dementsprechend bezieht sich der Begriff "Gewindeformteil" auf ein Verbindungselement, das mindestens ein Gewindeformteil besitzt. Dies beinhaltet insbesondere Anschlusstücke, Anschlusswinkel, Mehrfachverteiler, T-Stücke, Wand-T-Stücke, Wandwinkel, Systemübergänge, Übergangsstücke und gewinkelte Übergangsstücke, die jeweils mindestens ein Innen- und/oder Außengewinde aufweisen.

Die vorliegende Erfindung wurde unter Bezugnahme auf die in den Figuren gezeigten Ausführungsform der vorliegenden Erfindung im Detail beschrieben. Es versteht sich, dass die vorliegende Erfindung nicht auf die gezeigte Ausführungsform beschränkt ist, sondern sich der Umfang der vorliegenden Erfindung aus den beiliegenden Ansprüchen ergibt.

## Patentansprüche

1. Verbindungselementsystem (1) zur Herstellung einer Rohrverbindung (11) zwischen einem Verbindungselement (2) und einem Kunststoffrohr, einem Kunststoff-Verbundrohr oder einem Metall-Kunststoff-Verbundrohr, umfassend:
ein mit einer Quetschhülse (3) konfektioniertes Verbindungselement (2), das mindestens einen mit mehreren umlaufenden Außenrippen (5, 5a, 5b, 5c) versehenen Stützkörper (6) zum Aufschieben eines Rohrendes (7) umfasst; und
eine Quetschhülse (3), wobei das Verbindungselementsystem (1) weiter ein Halteelement (4) umfasst, das mit dem Verbindungselement (2) und der Quetschhülse (3) in Eingriff befindlich ist,
wobei das Verbindungselement (2) eine Eingriffsnut (10) aufweist und das Halteelement (4) mindestens ein verbindungselementseitiges Eingriffselement (14) aufweist, das in die Eingriffsnut (10) des Verbindungselements (2) eingreift,
**dadurch gekennzeichnet, dass**
es weiter eine Außenhülse (15) zur Fixierung der Quetschhülse (3) auf dem Stützkörper (6) des Verbindungselements (2) umfasst, wobei die Außenhülse (15) als Schiebehülse zum axialen Aufschieben auf die Quetschhülse (3) ausgebildet ist.

2. Verbindungselementsystem (1) nach Anspruch 1, **dadurch gekennzeichnet, dass** die Eingriffsnut (10) in einer Erhöhung (9) am Verbindungselement (2) ausgebildet ist, die den axialen Abschluss des Stützkörpers (6) bildet.

3. Verbindungselementsystem (1) nach Anspruch 1 oder Anspruch 2, **dadurch gekennzeichnet, dass** das Halteelement (6) ein quetschhülsenseitiges Eingriffselement (16) aufweist, das mit einer kooperierenden Aufnahme (12) der Quetschhülse (3) in Eingriff befindlich ist.

4. Verbindungselementsystem (1) nach einem der Ansprüche 1 bis 3, **dadurch gekennzeichnet, dass** die Quetschhülse (3) aus einem elastisch verformbaren polymeren Material ausgebildet ist.

5. Rohrverbindung (11) zwischen einem Rohrende (7) eines Kunststoffrohrs, eines Kunststoff-Verbundrohrs oder eines Metall-Kunststoff-Verbundrohrs und einem Verbindungselement (2), umfassend:
ein Rohrende (7) des Kunststoffrohrs, des Kunststoff-Verbundrohrs oder des Metall-Kunststoff-Verbundrohrs;
ein Verbindungselementsystem (1) nach einem der Ansprüche 1 bis 4, wobei der Stützkörper (6) des Verbindungselements (2) in das Rohrende (7) eingeführt ist;
wobei die Außenhülse (15) auf die Quetschhülse (3) zur Fixierung des Rohrendes (7) auf dem Stützkörper (6) des Verbindungselements (2) aufgebracht ist.

6. Rohrverbindung (11) nach Anspruch 5, **dadurch gekennzeichnet, dass** das Halteelement (4) nicht mit der Quetschhülse (3) und/oder der Außenhülse (14) in radialem Kontakt steht.

7. Rohrverbindung (11) nach Anspruch 5 oder Anspruch 6, **dadurch gekennzeichnet, dass** die dem Stützkörper (6) abgewandte Seite des quetschhülsenseitigen Eingriffselements (16) zumindest abschnittweise im Wesentlichen parallel zu einer Einführungsschräge (20) der Außenhülse (15) verläuft.

8. Rohrverbindung (11) nach einem der Ansprüche 5 bis 7, **dadurch gekennzeichnet, dass** das verbindungselementseitige Eingriffselement (14) als eine Mehrzahl von entlang eines Innenumfangs des Halteelements (4) angeordneter Einzelelemente ausgebildet ist.

9. Verfahren zur Herstellung einer Rohrverbindung (11) nach einem der Ansprüche 5 bis 8, wobei das Verfahren die folgenden Stufen umfasst:
Aufschieben der Außenhülse (15) auf das Kunststoffrohr, das Kunststoff-Verbundrohr oder das Metall-Kunststoff-Verbundrohr;
Einführen des Stützkörpers (6) des Verbindungselements (2) in das Rohrende (7); und
axiales Aufschieben der Außenhülse (15) auf die Quetschhülse (3), wodurch das Rohrende (7) gegen den Stützkörper (6) des Verbindungselements (2) gedrückt wird.

10. Verfahren nach Anspruch 9, **dadurch gekennzeichnet, dass** beim axialen Aufschieben der Außenhülse (15) auf das Rohrende (7) die Quetschhülse (3) derart gegen das Rohrende (7) gedrückt wird, dass die quetschhülsenseitigen Eingriffselemente (16) keine Kontaktstellen mit der Quetschhülse (3) aufweist.

11. Verfahren nach Anspruch 9 oder Anspruch 10, **dadurch gekennzeichnet, dass** das axiale Aufschieben der Außenhülse (15) auf das Rohrende (7) unter Verwendung eines Verpresswerkzeugs mit mindestens zwei Verpressjochen (19, 19a) erfolgt, wobei ein Verpressjoch (19) während des Aufschiebens an dem Halteelement (6) anliegt.

12. Verfahren nach einem der Ansprüche 9 bis 11, **dadurch gekennzeichnet, dass** der Außendurchmesser des Halteelements (4) im Wesentlichen dem Außendurchmesser der Außenhülse (15) in der Rohrverbindung (11) entspricht.

## Claims

1. Connecting element system (1) for producing a pipe connection (11) between a connecting element (2) and a plastic pipe, a plastic composite pipe or a metal-plastic composite pipe, comprising:
a connecting element (2) assembled with a crimp sleeve (3), which connecting element (2) comprises at least one support body (6) provided with a plurality of circumferential external ribs (5, 5a, 5b, 5c) for pushing on a pipe end (7); and
a crimp sleeve (3), wherein the connecting element system (1) further comprises a retaining element (4) which is in engagement with the connecting element (2) and the crimp sleeve (3),
wherein the connecting element (2) has an engagement groove (10) and the retaining element (4) has at least one connecting-element-side engagement element (14) which engages in the engagement groove (10) of the connecting element (2),
**characterized in that**
it further comprises an outer sleeve (15) for fixing the crimp sleeve (3) on the support body (6) of the connecting element (2), wherein the outer sleeve (15) is configured as a sliding sleeve for axial pushing onto the crimp sleeve (3).

2. Connecting element system (1) according to claim 1, **characterized in that** the engagement groove (10) is formed in a raised portion (9) on the connecting element (2), which forms the axial end of the support body (6).

3. Connecting element system (1) according to claim 1 or claim 2, **characterized in that** the retaining element (6) has a crimp-sleeve-side engagement element (16) which is in engagement with a cooperating receptacle (12) of the crimp sleeve (3).

4. Connecting element system (1) according to any one of claims 1 to 3, **characterized in that** the crimp sleeve (3) is made of an elastically deformable polymeric material.

5. Pipe connection (11) between a pipe end (7) of a plastic pipe, a plastic composite pipe or a metal-plastic composite pipe and a connecting element (2), comprising:
a pipe end (7) of the plastic pipe, the plastic composite pipe or the metal-plastic composite pipe;
a connecting element system (1) according to any one of claims 1 to 4, wherein the support body (6) of the connecting element (2) is inserted into the pipe end (7);
wherein the outer sleeve (15) which is applied onto the crimp sleeve (3) for fixing the pipe end (7) on the support body (6) of the connecting element (2).

6. Pipe connection (11) according to claim 5, **characterized in that** the retaining element (4) is not in radial contact with the crimp sleeve (3) and/or the outer sleeve (14).

7. Pipe connection (11) according to claim 5 or claim 6, **characterized in that** the side of the crimp-sleeve-side engagement element (16) facing away from the support body (6) extends, at least in sections, substantially parallel to an insertion bevel (20) of the outer sleeve (15).

8. Pipe connection (11) according to any one of claims 5 to 7, **characterized in that** the connecting-element-side engagement element (14) is formed as a plurality of individual elements arranged along an inner circumference of the retaining element (4).

9. Method for producing a pipe connection (11) according to any one of claims 5 to 8, wherein the method comprises the following steps:
pushing the outer sleeve (15) onto the plastic pipe, the plastic composite pipe or the metal-plastic composite pipe;
inserting the support body (6) of the connecting element (2) into the pipe end (7); and
axially pushing the outer sleeve (15) onto the crimp sleeve (3), as a result of which the pipe end (7) is pressed against the support body (6) of the connecting element (2).

10. Method according to claim 9, **characterized in that**, during the axial pushing of the outer sleeve (15) onto the pipe end (7), the crimp sleeve (3) is pressed against the pipe end (7) in such a manner that the crimp-sleeve-side engagement elements (16) have no points of contact with the crimp sleeve (3).

11. Method according to claim 9 or claim 10, **characterized in that** the axial pushing of the outer sleeve (15) onto the pipe end (7) is carried out using a pressing tool having at least two pressing jaws (19, 19a), wherein one pressing jaw (19) bears against the retaining element (6) during the pushing-on operation.

12. Method according to any one of claims 9 to 11, **characterized in that** the outside diameter of the retaining element (4) substantially corresponds to the outside diameter of the outer sleeve (15) in the pipe connection (11).

## Revendications

1. Système d'élément de raccordement (1) destiné à réaliser un raccord de tuyau (11) entre un élément de raccordement (2) et un tuyau en plastique, un tuyau composite plastique ou un tuyau composite métal-plastique, comprenant :
un élément de raccordement (2) assemblé avec une douille de sertissage (3), lequel comprend au moins un corps de support (6) muni de plusieurs nervures extérieures circonférentielles (5, 5a, 5b, 5c) pour l'emmanchement d'une extrémité de tuyau (7) ; et
une douille de sertissage (3), le système d'élément de raccordement (1) comprenant en outre un élément de retenue (4) en prise avec l'élément de raccordement (2) et la douille de sertissage (3),
l'élément de raccordement (2) présentant une rainure d'engagement (10) et l'élément de retenue (4) présentant au moins un élément d'engagement côté élément de raccordement (14) qui s'engage dans la rainure d'engagement (10) de l'élément de raccordement (2),
**caractérisé en ce que**
il comprend en outre une douille extérieure (15) destinée à fixer la douille de sertissage (3) sur le corps de support (6) de l'élément de raccordement (2), la douille extérieure (15) étant réalisée sous la forme d'une douille coulissante destinée à être emmanchée axialement sur la douille de sertissage (3).

2. Système d'élément de raccordement (1) selon la revendication 1, **caractérisé en ce que** la rainure d'engagement (10) est formée dans un relief (9) sur l'élément de raccordement (2), lequel forme l'extrémité axiale du corps de support (6).

3. Système d'élément de raccordement (1) selon la revendication 1 ou la revendication 2, **caractérisé en ce que** l'élément de retenue (6) présente un élément d'engagement côté douille de sertissage (16) qui est en prise avec un logement coopérant (12) de la douille de sertissage (3).

4. Système d'élément de raccordement (1) selon l'une quelconque des revendications 1 à 3, **caractérisé en ce que** la douille de sertissage (3) est réalisée en un matériau polymère élastiquement déformable.

5. Raccord de tuyau (11) entre une extrémité de tuyau (7) d'un tuyau en plastique, d'un tuyau composite plastique ou d'un tuyau composite métal-plastique et un élément de raccordement (2), comprenant :
une extrémité de tuyau (7) du tuyau en plastique, du tuyau composite plastique ou du tuyau composite métal-plastique ;
un système d'élément de raccordement (1) selon l'une quelconque des revendications 1 à 4, le corps de support (6) de l'élément de raccordement (2) étant introduit dans l'extrémité de tuyau (7) ;
la douille extérieure (15), appliquée sur la douille de sertissage (3) afin de fixer l'extrémité de tuyau (7) sur le corps de support (6) de l'élément de raccordement (2).

6. Raccord de tuyau (11) selon la revendication 5, **caractérisé en ce que** l'élément de retenue (4) n'est pas en contact radial avec la douille de sertissage (3) et/ou la douille extérieure (14).

7. Raccord de tuyau (11) selon la revendication 5 ou la revendication 6, **caractérisé en ce que** le côté de l'élément d'engagement côté douille de sertissage (16) tourné à l'opposé du corps de support (6) s'étend, au moins par sections, sensiblement parallèlement à une rampe d'introduction (20) de la douille extérieure (15).

8. Raccord de tuyau (11) selon l'une quelconque des revendications 5 à 7, **caractérisé en ce que** l'élément d'engagement côté élément de raccordement (14) est réalisé sous la forme d'une pluralité d'éléments individuels disposés le long d'une circonférence intérieure de l'élément de retenue (4).

9. Procédé de réalisation d'un raccord de tuyau (11) selon l'une quelconque des revendications 5 à 8, le procédé comprenant les étapes suivantes :
emmancher la douille extérieure (15) sur le tuyau en plastique, le tuyau composite plastique ou le tuyau composite métal-plastique ;
introduire le corps de support (6) de l'élément de raccordement (2) dans l'extrémité de tuyau (7) ; et
emmancher axialement la douille extérieure (15) sur la douille de sertissage (3), par quoi l'extrémité de tuyau (7) est pressée contre le corps de support (6) de l'élément de raccordement (2).

10. Procédé selon la revendication 9, **caractérisé en ce que**, lors de l'emmanchement axial de la douille extérieure (15) sur l'extrémité de tuyau (7), la douille de sertissage (3) est pressée contre l'extrémité de tuyau (7) de telle sorte que les éléments d'engagement côté douille de sertissage (16) ne présentent aucun point de contact avec la douille de sertissage (3).

11. Procédé selon la revendication 9 ou la revendication 10, **caractérisé en ce que** l'emmanchement axial de la douille extérieure (15) sur l'extrémité de tuyau (7) est réalisé à l'aide d'un outil de sertissage comportant au moins deux étriers de sertissage (19, 19a), un étrier de sertissage (19) étant en appui contre l'élément de retenue (6) pendant l'emmanchement.

12. Procédé selon l'une quelconque des revendications 9 à 11, **caractérisé en ce que** le diamètre extérieur de l'élément de retenue (4) correspond sensiblement au diamètre extérieur de la douille extérieure (15) dans le raccord de tuyau (11).
